Europäisches Patentamt

European Patent Office

Office européen des brevets

(11) Publication number: **0 165 026**
**B1**

(12) **EUROPEAN PATENT SPECIFICATION**

(45) Date of publication of patent specification: **11.10.89**

(21) Application number: **85304048.3**

(22) Date of filing: **07.06.85**

(51) Int. Cl.⁴: **F 16 B 13/04,** F 16 B 37/12,
F 16 L 3/00

(54) Fastening device.

(30) Priority: **13.06.84 US 620763**

(43) Date of publication of application:
**18.12.85 Bulletin 85/51**

(45) Publication of the grant of the patent:
**11.10.89 Bulletin 89/41**

(84) Designated Contracting States:
**DE FR GB SE**

(56) References cited:
**DE-A-2 524 413**
**DE-A-2 804 848**
**DE-A-3 002 031**
**DE-A-3 122 402**
**DE-A-3 236 983**
**GB-A-2 070 678**
**US-A-4 358 080**

(73) Proprietor: **TRW INC.**
**23555 Euclid Avenue**
**Cleveland Ohio 44117 (US)**

(72) Inventor: **Clough, Melvyn J.L.**
**28 Esterbrook Road**
**Acton Massachusetts 01720 (US)**

(74) Representative: **Jenkins, Richard Gray et al**
**R.G.C. Jenkins & Co. 26 Caxton Street**
**London SW1H 0RJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

The present invention is directed toward the art of mechanical fasteners and, more particularly, to a fastener component for push-on connection to a male connecting member having an external helical thread formation.

The invention is especially suited for forming fasteners of the type used in the automotive industry for connecting fuel line clamps and various other components to threaded studs that are welded to the vehicle body or frame. While the invention will be described with reference to its use for the noted purposes, it should be appreciated that the invention is capable of broader application and could be used in a variety of industries for many different purposes.

There has recently been developed a fastening system which has found fairly widespread use in the automotive industry. The system includes a small, male stud member having a threaded exterior and a mating female component, generally plastic, which can be axially pushed onto the stud member. Typically, the studs are joined to the vehicle frame or body components by a standard stud welding operation.

The desired relationship between the stud and the female member is preferably such that they can be axially pushed together under fairly low force but separated only with substantial reverse axial force or by an unthreading operation like a standard threaded nut.

A variety of different stud thread contours, as well as many different internal designs for the female component have been proposed in an attempt to provide the desired easy push-on, difficult to separate connection. There has, however, been little success in achieving this desired result. Typically, there has tended to be a direct relationship between the force required to connect components and the force required to separate, i.e., making the components more difficult to separate has generally been achieved only by making them significantly more difficult to join.

Fastener systems of the general type described are shown, for example, in DE—A—3,002,031, in which this patent the female aperture of the connector is provided with longitudinally positioned ribs which protrude radially into the interior. Increasing the size or thickness of the ribs to increase the interference between the ribs and the threaded stud can increase the force required for separation but produces corresponding increases in the force required for axial joining. In addition, there are practical limits that can be achieved with this design since permanent deformation of the ribs and even the exterior of the female connecting component will result at some predetermined level of interference.

The purpose of the subject invention is to provide a fastening component of the type described which can be applied to a male connecting member having an external helical thread formation with a comparatively low force axial push, but which can be removed only with the application of substantially greater force or by a normal unthreading operation. In addition, a significant increase in the force required for removal or separation is achieved without any increase in the application force and without permanent deformation of the interior or exterior of the component.

DE—A—2524413 cited in the search report on the claims originally filed in this application discloses a fastener component for connection to a male connecting member having an external helical thread formation, said fastener comprising a body defining a generally cylindrical aperture provided with an entrance end opening to the exterior of the body for axially receiving such a male connecting member, said body having integrally formed therewith at least one series of axially spaced flexible leg members, each of which extends about a portion of the circumference of the interior of the aperture and radially inwardly thereof and is inclined in a direction away from said entrance end, said legs being resiliently deflectable in a direction away from said entrance end by said male connecting member during insertion thereof in said aperture to enable their free ends to latch with said thread formation thereof to prevent axial withdrawal of said male connecting member from said aperture.

The present invention provides a fastener component as defined in the last preceding paragraph, characterised in that said body is molded in plastics with the or each series of axially spaced flexible leg members extending from a respective continuous longitudinally extending wall portion of the body and in that the free end of each of the leg members is provided with a flat configuration generally in a plane perpendicular to the axis of the aperture.

The fastener component body disclosed in DE—A—2524413 is formed as a sheet metal stamping with the leg members being formed by portions stamped out of and bent inwardly from the sheet material forming side walls of the fastener body thereby giving rise to longitudinal discontinuities in those sidewalls. Whilst in the intended application for the fastener component disclosed in DE—A—2524413 where the side walls are supported externally by the walls of a bore into which the fastener is inserted, the provision of these longitudinal discontinuities in, and the consequent weakening of, the side walls should not adversely affect the reliability of the fastener component, it will be understood that if the side walls are not supported externally they would be liable to deflect radially outwardly on an axial extraction force being applied to a male connecting member previously inserted into the fastener component thus lessening the axial force required for its extraction.

This disadvantage of the fastener component disclosed in DE—A—2524413 is avoided in the present invention by the body of the fastener being molded in plastics with the or each series of axially spaced flexible leg members extending from a respective continuous longitudinally extending wall portion of the body.

In a fastener component in accordance with the present invention, the leg members may each have a circumferential extent about the interior of said aperture lying in a helical path.

The leg members may each have a tapered cross-section and be inclined in a direction away from said entrance opening. In this case, each leg member may be provided with two surfaces which respectively face towards and away from said entrance end and are inclined at about 30 and 45 degrees to the axis of the aperture.

The fastener component may comprise first and second diametrically opposed said series of axially spaced flexible leg members. In this case, the fastener component may include openings extending into said body and intersecting said aperture, said openings having a longitudinal extent at least as great as the longitudinal extent of each of said series of leg members. Preferably there are a pair of said openings located on diametrically opposite sides of said aperture intermediate said first and second series of leg members.

The fastener component may include biasing means integrally formed on said body about the entrance end of said aperture. This biasing means may comprise a skirt member having a portion connected to said body and a free end portion lying in a plane generally perpendicular to the axis of said aperture. When provided, the skirt member preferably is resiliently deflectable in directions parallel to the axis of said aperture and has a tapered cross-section wherein said free end portion is relatively thin and the portion connected to said body is relatively thicker.

In order that the invention may be better understood, an embodiment thereof, which is given by way of example only, will now be described with reference to the accompanying drawings, in which:

Figure 1 is a side view of a fastener formed in accordance with a preferred embodiment of the invention;

Figure 2 is a top view of the fastener shown in Figure 1;

Figure 3 is a cross-sectional view taken on line 3—3 of Figure 1;

Figure 4 is a cross-sectional view taken on line 4—4 of Figure 2;

Figure 5 is a cross-sectional view similar to Figure 4 but showing the fastener assembled with a threaded stud;

Figure 6 is an enlarged view of the circled area of Figure 5 showing the relationship between the fastener and the stud in the normal installed but unloaded position; and,

Figure 7 is a view similar to Figure 6 but shows the relationship between the fastener and the stud upon application of an axial force tending to separate them.

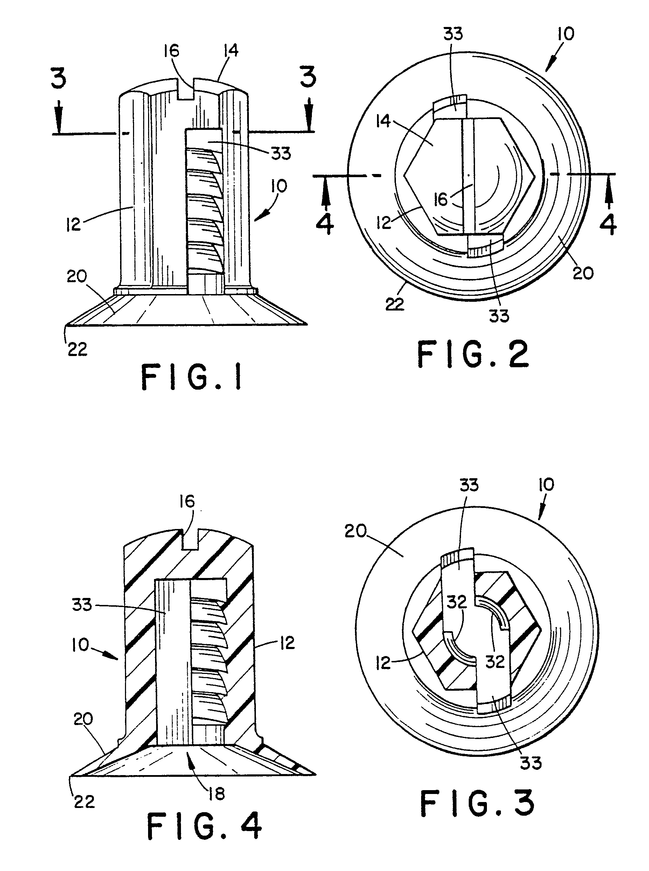

Referring to the drawings, Figures 1 through 4 show a molded plastic female fastener component 10 comprising a hex shaped body 12 having an upper closed end 14 provided with a transverse slot 16. The hex shape of the body 12 and the slot 16 are not essential to the invention but allow the use of a wrench or screwdriver for removing the fastener after it has been installed in a manner subsequently to be described.

As best shown in Figures 3 and 4, the lower end of body 12 includes an axially inwardly extending cylindrical aperture 18. A flange or skirt member 20 extends generally radially from body 12 about the entrance end of aperture 18. Skirt member 20 is relatively resilient and has a downwardly inclined, tapered cross-section as shown in Figure 2. The peripheral edge, or free end portion, 22 of skirt member 20 is relatively thin, is spaced outwardly from the entrance to aperture 18 and lies in a plane perpendicular to the axis thereof. The portion of the skirt member connected to the body is relatively thicker than the free end portion 22 and the skirt member is resiliently deflectable in directions parallel to the axis of the aperture to form a biasing means of the component.

As mentioned earlier, fastener components of this general type are widely used, for example, in the automotive industry in conjunction with threaded studs or bolts that have been stud welded to the vehicle frame or body. The fasteners are designed so that they can be axially pushed onto the studs but, ideally, removed only by unthreading. Many different types of longitudinally extending ribs or fins have been proposed for the interior portion of the female component in an attempt to achieve the desired relationship. These prior art approaches have not been particularly successful. The subject invention, however, provides an improved design for the interior of the female component which overcomes the noted problems. The design allows the component to be installed with a low force, axial push. Removal, on the other hand, can be accomplished only by unthreading or with the application of an extremely large axial force.

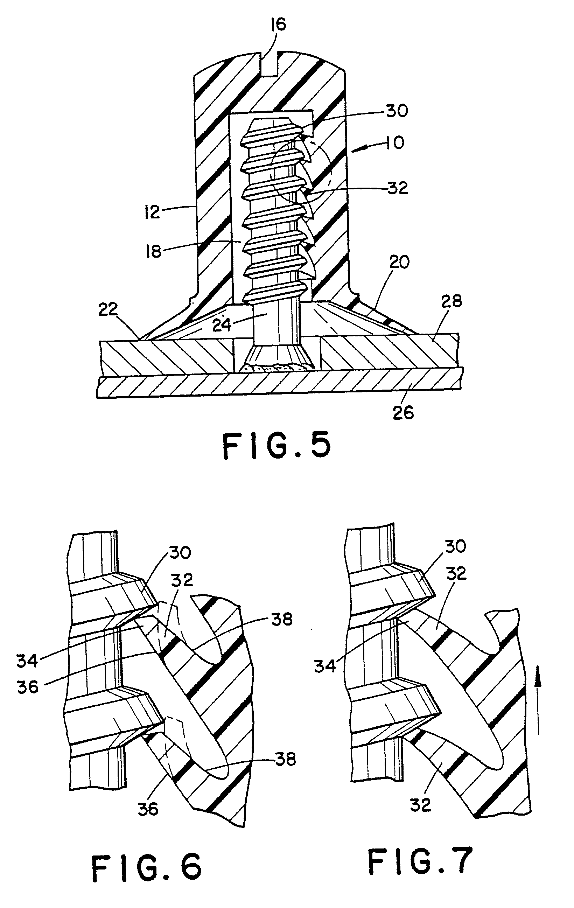

The preferred form of the inventive design can best be seen, and its operation understood, by reference to Figures 5 through 7. Specifically, Figure 5 shows the fastener 10 assembled on a helically threaded metal stud 24. Stud 24 is shown joined by a conventional stud welding operation to a subjacent metal frame member 26. A separate part or component 28 is held or connected to member 26 by the cooperation of fastener 10 and stud 24.

Stud 24 is illustrated as having a buttress-like, helical spiral thread form 30. This thread form is well known in the art and is shown and described, for example, in published Japanese Utility Model Application 56-42516 of September 9, 1980. This thread form has been illustrated as typical. It does not, however, form any particular part of the invention and the invention could be used with a variety of other helical thread forms.

Of importance is the arrangement of the internal leg members or fins 32. The leg members 32 are formed integrally with the body 12 and each leg member extends about a portion of the circumference of the interior of the aperture 18 and radially inwardly thereof. The leg members are arranged in at least one axially spaced apart series thereof with the or each series of leg members extending from a respective continuous longitudinally extending wall portion of the body. In the illustrated embodiment, as best shown in Figure 3, there are two diametrically opposed series of axially spaced leg members 32 in each of which series the leg members have a circumferential extent of approximately 90 degrees.

The circumferential extent of the leg members 32 is determined by a pair of vertical openings or windows 33 (see Figures 1 through 4) which extend through body 12 and intersect aperture 18. These openings have a longitudinal extent at least as great as the longitudinal extent of each of the series of leg members.

The leg members in each series are shown spaced apart a distance substantially equal to the pitch of the threaded formation of the associated stud with which the fastener component is intended to be used. In addition, each leg member has a circumferential extent about the interior of the aperture lying in a helical path corresponding to the helical path of the thread formation of the stud. As can be appreciated, the circumferential extent of the leg members 32 could vary from that shown. Also, the number and spacing of the leg members could, of course, vary.

The shape of leg members 32 is best illustrated in Figure 6. As shown, the leg members each have a tapered cross-section and are inclined in a direction away from the entrance end of the aperture. More specifically, each leg member 32 includes side surfaces 36 and 38 which extend from the inner wall of aperture 18. The surfaces 36 and 38 which respectively face towards and away from the aperture entrance end and are inclined from the wall of aperture 18 such that the legs 32 are inclined toward the inner end of the aperture and have a relative thick base portion tapering to a relatively thin free end portion 34 which is provided with a flat configuration generally in a plane perpendicular to the axis of the aperture. While the actual angles can vary, surfaces 36 preferably form an angle in the range of 30° relative to the axis of aperture 18 and surfaces 38 lie at an angle in the range of 45°.

The shape of the legs together with their flexibility in at least the direction of their incline allow the connector member 10 to be applied to the stud 24 by a low force axial push. As shown by dotted lines in Figure 6, the legs deflect resiliently to pass over the crests of threads 30. As the fastener 10 is completely moved onto the stud 24, the resilient skirt 20 engages member 28. Further movement causes deflection of the skirt 20 which produces an upward bias on the fastener and, thus, biases the free ends 34 of the legs 32 against the underside of threads 30 (as viewed in Figure 6). This produces a firm, vibration resistant engagement between the fastener and the stud.

While the fastener 10 can be removed from the stud 24 by an unthreading operation, attempts to remove it by application of an axial force are strongly resisted. Referring to Figure 7, for example, a force applied to the fastening tending to move the fastener in the direction of the arrow causes the free ends 34 of the leg members 32 to cam into the root of thread 30. This produces a latching effect between the stud and the legs of the fastener. The shape of the leg members and their free ends is such that applying additional axial pull-off force acts to attempt to compress the legs rather than reverse bend them. Thus whilst push-on application forces are comparatively low, pull-off forces are extremely high.

While the invention has been described in conjunction with its use in a cap-type nut, it should be appreciated that the invention is capable of broader application. For example, the fastener can be formed as an integral part of other components such as fuel line clamps, housings or the like.

## Claims

1. A fastener component (10) for connection to a male connecting member having an external helical thread formation, said fastener comprising a body (12) defining a generally cylindrical aperture (18) provided with an entrance end opening to the exterior of the body for axially receiving such a male connecting member, said body having integrally formed therewith at least one series of axially spaced flexible leg members (32), each of which extends about a portion of the circumference of the interior of the aperture and radially inwardly thereof and is inclined in a direction away from said entrance end, said leg members being resiliently deflectable in a direction away from said entrance end by said male connecting member during insertion thereof in said aperture to enable their free ends (34) to latch with said thread formation thereof to prevent axial withdrawal of said male connecting member from said aperture, characterised in that said body is molded in plastics with the or each series of axially spaced flexible leg members (32) extending from a respective continuous longitudinally extending wall portion of the body and in that the free end (34) of each of the leg members (32) is provided with a flat configuration generally in a plane perpendicular to the axis of the aperture (18).

2. A fastener component as claimed in claim 1, wherein said leg members (32) each have a circumferential extent about the interior of said aperture (18) lying in a helical path.

3. A fastener component as claimed in claim 1 or 2, wherein said leg members (32) each have a tapered cross-section.

4. A fastener component as claimed in claim 3, wherein each leg member (32) is provided with two surfaces (36, 38) which respectively face towards and away from said entrance end and are inclined at about 30 and 45 degrees to the axis of the aperture (18).

5. A fastener component as claimed in any one

EP 0 165 026 B1

of the preceding claims, comprising first and second diametrically opposed said series of axially spaced flexible leg members (32).

6. A fastener component as claimed in claim 5, including openings (33) extending into said body and intersecting said aperture, said openings having a longitudinal extent at least as great as the longitudinal extent of each of said series of leg members.

7. A fastener component as claimed in claim 6, wherein there are a pair of said openings (33) located on diametrically opposite sides of said aperture intermediate said first and said second series of leg members.

8. A fastener component as claimed in any one of the preceding claims, including biasing means (20) integrally formed on said body about the entrance end of said aperture (18).

9. A fastener component as claimed in claim 8, wherein said biasing means comprises a skirt member (20) having a portion connected to said body and a free end portion (22) lying in a plane generally perpendicular to the axis of said aperture.

10. A fastener component as claimed in claim 9, wherein said skirt member is resiliently deflectable in directions parallel to the axis of said aperture and has a tapered cross-section wherein said free end portion is relatively thin and the portion connected to said body is relatively thicker.

## Patentansprüche

1. Befestigungselement (10) zum Verbinden mit einem Steckverbindungselement mit einem schraubenförmigen Außengewinde, wobei das Befestigungselement einen eine im allgemeinen zylindrische Öffnung (18) bildenden Körper (12) aufweist und diese Öffnung (18) mit einer zu der Außenseite des Körpers geöffneten Einlaßöffnung versehen ist zur axialen Aufnahme eines solchen Steckverbindungselements, wobei der Körper mindestens eine Reihe von axial in einem Abstand angeordneten, einstückig damit ausgebildeten, elastischen Schenkeln (32) aufweist, welche sich jeweils über einen Abschnitt des Innenumfangs der Öffnung radial nach innen erstrecken und in von dem Einlaßende abgewandter Richtung geneigt sind, wobei die Schenkel in von dem Einlaßende abgewandter Richtung elastisch abbiegbar sind durch das Steckverbindungselement während des Einführens desselben in die Öffnung, so daß deren freie Enden (34) in das Gewinde eingreifen und so ein axiales Entfernen des Steckverbindungselements aus der Öffnung verhindern, dadurch gekennzeichnet, daß der Körper mit der Reihe bzw. den Reihen von axial in einem Abstand angeordneten, sich von einem jeweiligen durchgehenden, sich längs erstreckenden Wandabschnitt des Körpers erstreckenden, elastischen Schenkeln (32) aus Kunststoff geformt ist, und daß das freie Ende (34) jedes Schenkels (32) eine im allgemeinen in einer senkrecht zu der Achse der Öffnung (18) angeordneten Ebene liegende flache Konfiguration aufweist.

2. Befestigungselement nach Anspruch 1, dadurch gekennzeichnet, daß sich die Schenkel (32) jeweils am Innenumfang der Öffnung (18) schraubenförmig angeordnet erstrecken.

3. Befestigungselement nach Anspruch 1 oder 2, dadurch gekennzeichnet, daß die Schenkel (32) jeweils einen konischen Querschnitt aufweisen.

4. Befestigungselement nach Anspruch 3, dadurch gekennzeichnet, daß jeder Schenkel (32) zwei Flächen aufweist, welche jeweils zu dem Einlaßende hin- oder davon abgewandt sind und in einem Winkel von etwa 30° und 45° zu der Achse der Öffnung (18) geneigt sind.

5. Befestigungselement nach einem der vorstehenden Ansprüche, dadurch gekennzeichnet, daß dieses eine erste und zweite diametral gegenüberliegend angeordnete Reihe von axial in einem Abstand angeordneten, elastischen Schenkeln (32) aufweist.

6. Befestigungselement nach Anspruch 5, dadurch gekennzeichnet, daß dieses sich in den Körper erstreckende und die Öffnung (18) schneidende Öffnungen (33) aufweist, wobei sich die Öffnungen (33) längs mindestens so weit erstrecken wie jede der Reihen von Schenkeln.

7. Befestigungselement nach Anspruch 6, dadurch gekennzeichnet, daß zwei Öffnungen (33) an diametral gegenüberliegenden Seiten der Öffnung (18) zwischen der ersten und der zweiten Reihe von Schenkeln angeordnet sind.

8. Befestigungselement nach einem der vorstehenden Ansprüche, dadurch gekennzeichnet, daß dieses eine einstückig mit dem Körper um das Einlaßende der Öffnung (18) ausgebildete Vorspannvorrichtung (20) aufweist.

9. Befestigungselement nach Anspruch 8, dadurch gekennzeichnet, daß die Vorspannvorrichtung ein Randelement (20), welches in einem Abschnitt mit dem Körper verbunden ist, und einen in einer im allgemeinen senkrecht zu der Achse der Öffnung (18) angeordneten Ebene liegenden freien Endabschnitt (22) aufweist.

10. Befestigungselement nach Anspruch 9, dadurch gekennzeichnet, daß das Randelement parallel zu der Achse der Öffnung (18) elastisch abbiegbar ist und einen konischen Querschnitt aufweist und daß der freie Endabschnitt relativ dünn und der mit dem Körper verbundene Abschnitt relativ stärker ausgebildet ist.

## Revendications

1. Composant de fixation (10) destiné à la connexion à un organe de connexion mâle présentant une formation en filet hélicoïdal externe, ladite fixation comprenant un corps (12) définissant une ouverture généralement cylindrique (18) munie d'une extrémité d'entrée débouchant à l'extérieur du corps en vue d'y recevoir axialement un tel organe de fixation mâle, une série au moins d'éléments de jambe flexibles et espacés axialement (32) étant formée d'un seul tenant sur ledit corps, chacun desdits éléments de jambe s'étendant autour d'une portion de la circonférence intérieure de l'ouverture et radialement vers l'intérieur de celle-ci, et est inclinée dans une direction s'éloignant de ladite extrémité d'entrée, lesdits éléments de jambe pouvant être pliés élastiquement dans une direction s'éloignant de ladite extrémité d'entrée par ledit organe de connexion mâle pendant son insertion dans ladite ouverture pour permettre à leurs extrémités libres (34) de se verrouiller avec ladite formation de filet pour éviter le retrait axial dudit organe de connexion mâle de ladite ouverture, caractérisé en ce que ledit corps est moulé en matière plastique, la ou chacune des séries d'éléments de jambe flexibles et espacés axialement (32) s'étendent depuis une portion de paroi d'extrémité respective du corps, continue et s'étendant longitudinalement et en ce que l'extrémité libre (34) de chacune des jambes (32) est munie d'une configuration plate, généralement dans un plan perpendiculaire à l'axe de l'ouverture (18).

2. Composant de fixation selon la revendication 1, dans lequel lesdits éléments de jambe (32) présentent chacun une dimension circonférentielle autour de l'intérieur de l'ouverture (18) qui est située dans un parcours hélicoïdal.

3. Composant de fixation selon la revendication 1 ou 2, dans lequel lesdits éléments de jambe (32) ont chacun une section conique.

4. Composant de fixation selon la revendication 3, dans lequel élément de jambe (32) est muni de deux surfaces (36, 38) qui font respectivement face vers et à l'opposé de ladite extrémité d'entrée sont inclinées d'environ 30 à 45° par rapport à l'axe de l'ouverture (18).

5. Composant de fixation selon l'une quelconque des revendications précédentes, comprenant des première et seconde desdites séries d'éléments de jambe flexibles est espacés axialement (32) qui sont diamétralement opposées.

6. Composant de fixation selon la revendication 5, comprenant des ouvertures (33) s'étendant dans ledit corps et intersectant ladite ouverture, lesdites ouvertures présentant une dimension longitudinale au moins aussi importante que la dimension longitudinale de chacune desdites séries d'éléments de jambe.

7. Composant de fixation selon la revendication 6, dans lequel est prévue une paire desdites ouvertures (33) situées sur les côtés diamétralement opposés de ladite ouverture entre lesdites première et seconde séries d'éléments de jambe.

8. Composant de fixation selon l'une quelconque des revendications précédentes, comprenant un moyen de sollicitation (20) formé d'un seul tenant avec ledit corps autour de l'extrémité d'entrée de ladite ouverture (18).

9. Composant de fixation selon la revendication 8, dans lequel ledit moyen de sollicitation comprend un élément de jambe (20) présentant une portion reliée audit corps et une portion d'extrémité libre (22) située dans un plan généralement perpendiculaire à l'axe de ladite ouverture.

10. Composant de fixation selon la revendication 9, dans lequel élément de jambe peut être plié élastiquement dans des directions parallèles à l'axe de ladite ouverture et présente une section conique, dans lequel ladite portion d'extrémité libre est relativement mince et la portion reliée audit corps est relativement plus épaisse.

EP 0 165 026 B1

FIG. 1

FIG. 2

FIG. 4

FIG. 3

1

FIG.5

FIG.6

FIG.7

2